# EUROPEAN PATENT APPLICATION

(11) **EP 2 587 575 A1**
(43) Date of publication of application: **01.05.2013**
(21) Application number: 10853714.3
(22) Date of filing: 24.06.2010
(51) Int. Cl.: H01M 8/02, C23C 14/22, C23C 14/02

(54) **SEPARATOR PLATE FOR A FUEL CELL AND A PRODUCTION METHOD THEREFOR**

(30) Priority: 24.06.2010 KR 20100059880
(71) Applicant: Hyundai Hysco, Ulsan 683-711 (KR)
(72) Inventor: JEON, Yoo-Taek, Yongin-si Gyeonggi-do 446-911 (KR); KIM, Eun-Young, Gunpo-si Gyeonggi-do 435-775 (KR); MOON, Man-Been, Guri-si Gyeonggi-do 471-754 (KR)
(74) Representative: Zacco Denmark A/S
(86) International application number: PCT/KR2010/004117
(87) International publication number: WO 2011/162431

(57) **Abstract**

The present invention relates to a bipolar plate for a fuel cell and a method of manufacturing the same, and relates to an invention wherein a surface-modification layer is formed through the use of non-thermal plasma processing such that it is possible to prevent the hydrophobic characteristics which appear during gasket formation and to have outstanding hydrophilic characteristics, and such that it is possible to obtain the advantageous effect of outstanding corrosion resistance and electrical conductivity not only initially but also even after long-term use in a fuel-cell operating environment, and also such that it is possible to maintain outstanding durability even when using a normal low-price stainless-steel sheet base material, and it is possible to reduce the unit cost of production of the bipolar plate for the fuel cell since surface processing can be carried out at low cost.

## Description

### [Technical Field]

The present invention relates to a bipolar plate for fuel cells and a method of manufacturing the same, and more particularly, to a technology for producing a surface coating layer, which is applied to a bipolar plate for a polymer electrolyte membrane fuel cell (PEMFC), provides excellent properties in terms of corrosion resistance, electrical conductivity and durability, and ensures maximized flowability of water or gas therein by hydrophilic treatment using non-thermal plasma.

### [Background Art]

In general, a unit cell of a fuel cell generates too low a voltage to be used alone in practice. Thus, a fuel cell includes several to several hundred unit cells stacked therein. When stacking the unit cells, a bipolar plate is used to facilitate electrical connection between the unit cells while separating reaction gases.

The bipolar plate is an essential component of a fuel cell together with a membrane electrode assembly (MEA) and performs various functions such as structural support for the MEA and gas diffusion layer (GDLs), collection and transmission of electric current, transmission and removal of reaction gas, transmission of cooling water used for removal of heat, and the like.

Thus, it is necessary for materials of the bipolar plate to have excellent electrical and thermal conductivity, gas-tightness, chemical stability, and the like.

Graphite materials or composite graphite materials consisting of a resin and graphite mixture are used as the materials for bipolar plates.

However, graphite materials exhibit lower strength and gas-tightness than metallic materials, and suffer from higher manufacturing costs and lower productivity when applied to manufacture of bipolar plates. Recently, metallic bipolar plates have been actively investigated to overcome such problems of the graphite bipolar plates.

When a bipolar plate is made of a metallic material, there are many advantages in that volume and weight reduction of a fuel cell stack can be achieved via thickness reduction of the bipolar plate, and in that the bipolar plate can be fabricated by stamping, thereby ensuring mass production of bipolar plates.

However, the metallic material inevitably undergoes corrosion in use of the fuel cell, causing contamination of the MEA and performance deterioration of the fuel cell stack. Further, a thick oxide film can form on the surface of the metallic material in use of the fuel cell over time, thereby causing increase in internal resistance of the fuel cell.

Stainless steel, titanium alloys, aluminum alloys, nickel alloys, and the like have been proposed as candidate materials for the bipolar plate of the fuel cell.

Among these materials, stainless steel has received attention for its lower price and good corrosion resistance, but further improvements in corrosion resistance and electrical conductivity are still needed.

In addition, stainless steel exhibits hydrophobic properties and provides low flowability of cooling water and fuel gas circulated in the fuel cell, thereby causing deterioration in fuel cell efficiency.

In particular, the surface of the metal bipolar plate becomes hydrophobic during heat treatment performed to form a gasket between the metal bipolar plates for formation of a stack, thereby causing deterioration in flowability of cooling water and fuel gas in the fuel cell.

As a result, differential pressure increases in a flow passage in the metal bipolar plate and causes decrease in durability of a particular part thereof, thereby causing damage of the bipolar plate and deterioration in performance of the fuel cell.

### [Disclosure]

### [Technical Problem]

The present invention is directed to solving such problems in the art, and an aspect of the present invention is to provide a bipolar plate for fuel cells, which includes a surface modification layer formed on the surface thereof through non-thermal plasma treatment to ensure excellent corrosion resistance and electrical conductivity (contact resistance) not only in operation of forming a gasket but also in operation for a long period of time under high temperature/high humidity operating conditions of the fuel cell, and provides good flowability of water or gas in the fuel cell, and a method of manufacturing the same.

### [Technical Solution]

In accordance with one embodiment of the present invention, a method of manufacturing a bipolar plate for fuel cells includes performing surface modification on a surface of the bipolar plate to produce a hydrophilic surface so as to ensure good flowability of water and gas.

In this embodiment, the bipolar plate may be made of a stainless steel plate or a stainless steel plate including a coating layer, and the surface modification may include non-thermal plasma treatment.

In this case, the non-thermal plasma treatment may include injecting plasma to the surface of the metal bipolar plate, wherein the plasma includes at least one selected from among oxygen (O₂), nitrogen (N₂), hydrogen (H₂) and argon (Ar). Here, the non-thermal plasma treatment may be performed for 1 to 600 seconds until the metal bipolar plate has a surface roughness Ra of 0.001 µm to 1 µm

In accordance with another embodiment of the present invention, a method for manufacturing a bipolar plate for fuel cells includes: (a) forming a metal bipolar plate for fuel cells, (b) performing pretreatment on a surface of the metal bipolar plate, and (c) forming a plasma hydrophilic treatment layer by performing non-thermal plasma treatment on the surface of the metal bipolar plate after performing the pretreatment.

The step of (b) performing pretreatment may include at least one of (b-1) wet-cleaning the surface of the metal bipolar plate, and (b-2) dry-cleaning the surface of the metal bipolar plate.

The step of (b-1) wet cleaning may be performed using acetone or ethanol for 5 minutes to 10 minutes, and the step of (b-2) dry cleaning may be performed using atmospheric pressure plasma cleaning.

The method may further include forming a coating layer on the surface of the metal bipolar plate between the step of (b) performing pretreatment and the step of (c) performing non-thermal plasma treatment, and the coating layer may be a dry coating layer or a wet coating layer.

The present invention provides a bipolar plate for fuel cells manufactured by any one of the aforementioned methods and including a plasma hydrophilic treatment layer, which has modified properties in terms of corrosion resistance, electrical conductivity and water flowability.

The plasma hydrophilic treatment layer may have hydrophilic properties (water flowability) ensuring a corrosion current density of 10 mA/cm² or less (@0.9VNHE) (durability), a contact resistance of 25 mΩcm² or less (electrical conductivity), and a surface contact angle of 30° or less.

Further, the plasma hydrophilic treatment layer may have a thickness of 1 nm to 10,000 nm.

### [Advantageous Effects]

The bipolar plate for fuel cells according to the present invention includes a surface modification layer formed through non-thermal plasma treatment to prevent generation of hydrophobic properties upon a gasket forming process. In addition, the bipolar plate exhibits excellent properties in terms of corrosion resistance and electrical conductivity not only in an initial stage but also after use under fuel cell operating conditions for a long period of time.

Further, the method according to the present invention provides excellent durability even with a typical inexpensive stainless steel plate as a base, and permits surface treatment with low cost using non-thermal plasma surface treatment, thereby lowering manufacturing costs.

### [Description of Drawings]

Fig. 1 is a sectional view of a non-thermal plasma hydrophilic treatment layer according to one embodiment of the present invention.
Fig. 2 is a flowchart of a method for forming a bipolar plate for fuel cells according to one embodiment of the present invention.
Fig. 3 to Fig. 7 are sectional views of the method for forming a bipolar plate for fuel cells according to the embodiment of the present invention.
Fig. 8 is a conceptual view of a method for measuring contact resistance of a bipolar plate for fuel cells according to one exemplary embodiment of the invention.
Fig. 9 is a picture of a non-thermal plasma hydrophilic treatment layer according to one embodiment of the present invention, showing hydrophilic properties of the non-thermal plasma hydrophilic treatment layer in side view.
Fig. 10 is a side-sectional view of a non-thermal plasma hydrophilic treatment layer according to one embodiment of the present invention, showing the hydrophilic properties of the non-thermal plasma hydrophilic treatment layer.

### [Best Mode]

Exemplary embodiments of the present invention will now be described in detail with reference to the accompanying drawings.

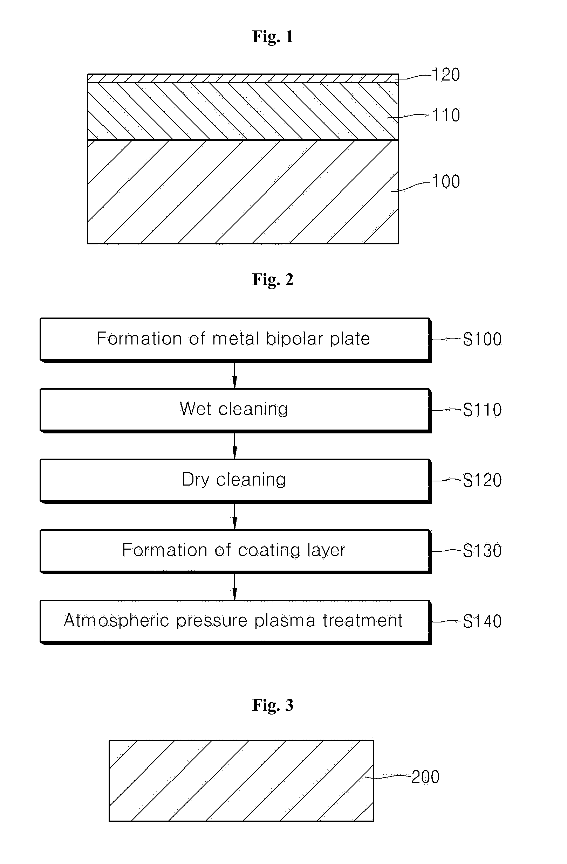

Fig. 1 is a sectional view of a non-thermal e plasma hydrophilic treatment layer according to one embodiment of the present invention.

Referring to Fig. 1, a bipolar plate 100 includes a dry or wet coating layer 110 thereon, and a plasma hydrophilic treatment layer 120 on the coating layer 110.

Although any of metallic or graphite bipolar plates may be used as the bipolar plate 100 without limitation, a metal bipolar plate made of stainless steel (including SUS 316L) is advantageously used as the bipolar plate according to the present invention. The metal bipolar plate of stainless steel allows easier formation of flow passages or manifolds than other bipolar plates and has good properties in terms of corrosion resistance and durability. Thus, the metal bipolar plate of stainless steel is suited to the bipolar plate for fuel cells according to the present invention to achieve desired effects.

In particular, a base material of the metal bipolar plate according to the present invention may be stainless steel which contains 16 wt% to 28 wt% of chromium, more specifically about 18 wt% of chromium.

More specifically, the metal bipolar plate made of stainless steel includes 0.08 wt% or less of carbon (C), 16 wt% to 28 wt% of chromium (Cr), 0.1 wt% to 20 wt% of nickel (Ni), 0.1 wt% to 6 wt% of molybdenum (Mo), 0.1 to 5 wt% of tungsten (W), 0.1 wt% to 2 wt% of tin (Sn), 0.1 wt% to 2 wt% of copper (Cu), and the balance of iron (Fe) and unavoidable impurities. In some embodiments, the stainless steel may be austenite stainless steel such as SUS 316L having a thickness of 0.1 t to 0.2 t.

Next, the coating layer 110 may be at least one selected from a coating layer formed through a dry coating process such as PVD (Physical Vapor Deposition) and a coating layer formed through a wet coating process such as electroplating, electroless plating, CVD (Chemical Vapor Deposition), and the like.

Further, the coating layer 110 may be formed only on one side of the bipolar plate or on both sides of the bipolar plate.

In this embodiment, the coating layer 110 is formed to secure both corrosion resistance and electrical conductivity of the bipolar plate and may include any one selected from gold (Au), platinum (Pt), ruthenium (Ru), iridium (Ir), ruthenium oxide (RuO₂), and iridium oxide (IrO₂).

When the surface of the stainless steel bipolar plate according to the present invention is exposed to high temperature/high humidity operating conditions for long durations, metal oxides are formed on the surface thereof. The metal oxides can maintain corrosion resistance but have a negative influence on electrical conductivity.

Therefore, according to the present invention, the coating layer 110 is formed of a material exhibiting excellent corrosion resistance and electrical conductivity. As a result, the bipolar plate for fuel cells according to the present invention may be prepared to have excellent corrosion resistance and electrical conductivity not only at an initial operating stage but also after long-term operation.

The coating layer 110 according to the present invention may have a coating density of 1 µg/cm² to 500 µg/cm².

If the coating density is less than 1 µg/ cm², it can be difficult to obtain a desired degree of electrical conductivity. If the coating density exceeds 500 µg/ cm², the effect of improving electrical conductivity is not obtained in proportion to the increase of the coating amount, thereby failing to achieve a desired effect of the coating layer.

However, when only the coating layer 110 is provided to the metal bipolar plate, there can be a problem in that the surface of the metal bipolar plate can become hydrophobic during formation of a gasket.

Thus, according to the present invention, the plasma hydrophilic treatment layer 120 is formed on the coating layer 110, thereby enhancing flowability of water in the fuel cell while stably securing corrosion resistance and electrical conductivity.

Such a plasma hydrophilic treatment layer 120 may be formed by non-thermal plasma treatment comprising atmospheric pressure plasma, which will be described in detail hereinafter.

Fig. 2 is a flowchart of a method for forming a bipolar plate for fuel cells according to one embodiment of the present invention.

Referring to Fig. 2, the process of forming the plasma hydrophilic treatment layer includes forming a metal bipolar plate (S100), wet cleaning the metal bipolar plate (S110), dry cleaning the metal bipolar plate (S120), forming a coating layer on a surface of the metal bipolar plate (S130), and performing atmospheric pressure (non-thermal) plasma treatment (S 140).

Here, the operation of forming a coating layer (S130) is not an essential process. Thus, the surface modification layer may be formed only through the operation of wet cleaning (S110) and the operation of dry cleaning (S120), as needed. In this case, the operation of dry cleaning (S120) may be performed using atmospheric pressure plasma treatment.

Next, each operation of the method for manufacturing a bipolar plate will be described in more detail.

Fig. 3 to Fig. 7 are sectional views illustrating the method for forming a bipolar plate for fuel cells according to the embodiment of the present invention.

Referring to Fig. 3, a metal bipolar plate 200 is manufactured. In this invention, the metal bipolar plate is used for a polymer electrolyte membrane fuel cell (PEMFC) operating under high temperature/high humidity conditions and is manufactured from a material exhibiting good properties in terms of corrosion resistance, electrical conductivity and durability.

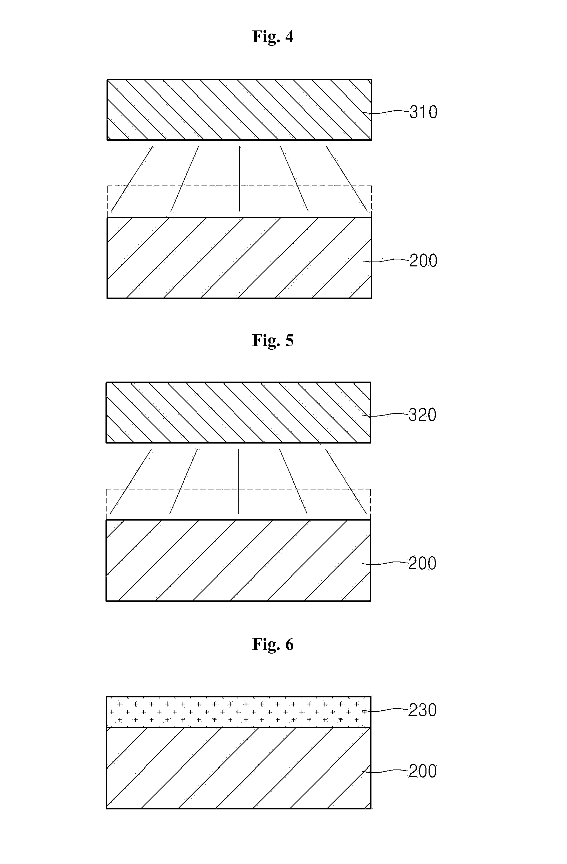

Referring to Fig. 4, as a primary pretreatment process before coating, wet etching is performed to remove organic/inorganic foreign matter from a surface of the metal bipolar plate 200.

Although a cleaning liquid injector 310 is illustrated as being disposed above the metal bipolar plate 200 to inject a cleaning liquid such as acetone or ethanol in this embodiment, the present invention is not limited thereto.

Here, cleaning may be performed for 5 minutes to 10 minutes. If cleaning is performed for less than 5 minutes, the organic/inorganic foreign matter cannot be completely removed from the surface of the metal bipolar plate, and if cleaning is performed for more than 10 minutes, the surface of the bipolar plate can be damaged due to excessive cleaning.

Next, referring to Fig. 5, a dry cleaning machine 320 is placed above the metal bipolar plate 200 to perform dry cleaning as a secondary pretreatment process. At this time, dry cleaning may be performed to activate the surface of the metal bipolar plate by removing an oxide layer and foreign matter from the surface thereof. In addition, as in wet etching, the dry cleaning machine 320 may be placed above the metal bipolar plate 200 to perform dry cleaning.

In this invention, dry cleaning may be performed using an atmospheric pressure plasma cleaning process. Here, the atmospheric pressure plasma cleaning is performed according to the same procedure as in non-thermal plasma treatment for forming a hydrophilic treatment layer described below and will be described in detail below.

Referring to Fig. 6, in order to obtain corrosion resistance and electrical conductivity of the metal bipolar plate 200, the operation of forming a coating layer 230 is performed. Here, the coating layer 230 is formed by forming a coating layer as described with reference to Fig. 1, and a PVD coating layer may be formed as the coating layer.

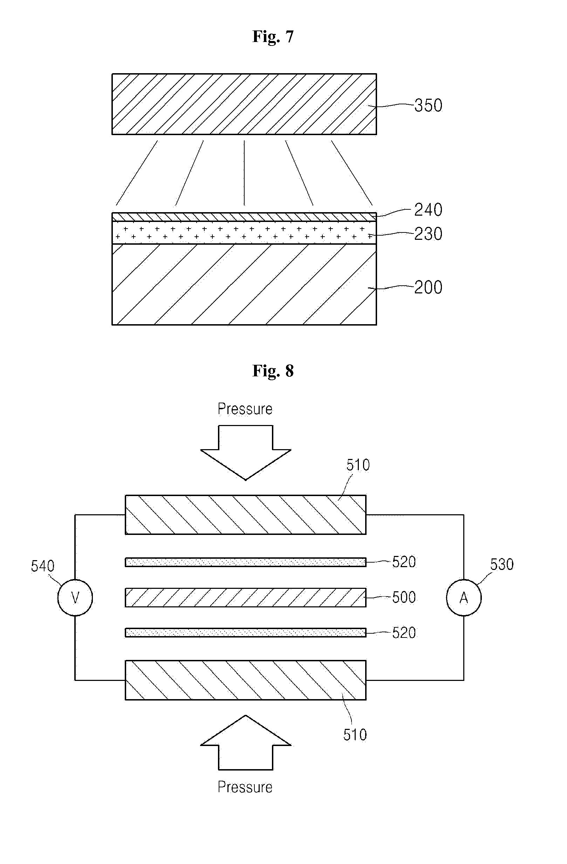

Referring to Fig. 7, non-thermal plasma treatment is performed on the surface of the coating layer as the outermost layer of the metal bipolar plate 200 to form a plasma hydrophilic treatment layer 240.

Here, a non-thermal plasma apparatus 350 injects plasma onto the surface of the metal bipolar plate 200 in air or by gas discharge at room temperature and atmospheric pressure to change a surface molecular structure of the metal bipolar plate 200.

In such non-thermal plasma treatment, since plasma is emitted from above the metal bipolar plate 200 as shown in the drawings, in-line production equipment may be designed for manufacture of the bipolar plate, thereby improving productivity. Further, since plasma may include at least one selected from oxygen (O₂), nitrogen (N₂), hydrogen (H₂) and argon (Ar), various treatment functions, treatment objects, short treatment time, and low maintenance cost can be advantageously achieved.

With such advantages as described above, the non-thermal plasma treatment is performed for 1 second to 600 seconds to form a 1 nm to 10,000 nm thick plasma hydrophilic treatment layer 240.

As a result, the metal bipolar plate 200 may have a surface roughness Ra of 0.001 µm to 1 µm and a surface contact angle of 30° or less to exhibit hydrophilic properties (water flowability).

Further, the metal bipolar plate 200 including the plasma hydrophilic treatment layer 240 may have a corrosion current density of 10 mA/cm² or less (@0.9VNHE) to enhance corrosion resistance and a contact resistance of 25 mΩcm² or less to enhance electrical conductivity.

Such characteristics of the metal bipolar plate may be evaluated through measurement of corrosion resistance and electrical conductivity, which will be described hereinafter.

### 1. Measurement of contact resistance

First, contact resistance was measured using a contact resistance measurement apparatus to evaluate electrical conductivity.

Fig. 8 is a conceptual view of a method for measuring contact resistance of a bipolar plate for fuel cells according to one exemplary embodiment of the invention.

Referring to Fig. 8, in order to determine optimal parameters for cell assembly through measurement of contact resistance of a metal bipolar plate 500, a modified Davies method was used to measure contact resistance between the metal bipolar plate 500 and carbon paper 520 when pressure was brought to copper plates 510.

The contact resistance was measured based on the principle of measuring four-wire current-voltage via a contact resistance measurement apparatus Model IM6 available from Zahner Inc.

Measurement of contact resistance was performed by application of DC 5A and AC 0.5A to a measurement target through an electrode area of 25 cm² in a constant current mode at a frequency in the range from 10 kHz to 10 mHz The carbon paper 520 was 10 BB available from SGL Inc.

In the contact resistance measurement apparatus 50, the metal bipolar plate 500 was disposed between two pieces of carbon paper 520 and gold coated copper plates 510 connected to both a current supply apparatus 530 and a voltage measurement apparatus 540.

Next, voltage was measured by applying DC 5A/AC 0.5A to the metal bipolar plate 500 through an electrode area of 25 cm² using the current supply apparatus 530 (Model IM6, Zahner Inc.).

Then, the metal bipolar plate 500, carbon paper 520, and copper plates 510 were compressed to form a stack structure from both copper plates 510 of the contact resistance measurement apparatus 50 using a compression maintenance measurement apparatus Model No. 5566 available from Instron Inc. Using the compression maintenance test, a pressure of 50 N/cm² to 150 N/cm² was applied to the contact resistance measurement apparatus 50.

As a result, it can be seen that the metal bipolar plate had a contact resistance of 25 mΩcm².

### 2. Measurement of corrosion current density

Corrosion current density (hereinafter, "corrosion density") of the metal bipolar plate for fuel cells according to the present invention was measured using a corrosion current measurement apparatus (EG&G Model No. 273A).

Tests for corrosion durability were performed in a simulated environment of a polymer electrolyte fuel cell (PEFC).

First, the metal bipolar plate was dipped in a solution of 0.1N H₂SO₄ + 5ppm HF as an etching solution at 80 □ and subjected to O₂ bubbling for 1 hour, followed by measurement of the corrosion density thereof at an open circuit potential (OCP) of -0.25V vs. at an OCP of -1.2V vs. SCE.

Further, other physical properties were measured at -0.24V vs. SCE (saturated calomel electrode) for a PEFC anode environment and at 0.6V vs. SCE for a PEFC cathode environment.

Here, the measured properties were evaluated based on data of corrosion current at 0.6V vs. SCE in a simulated cathode environment of a fuel cell.

The anode environment is an environment in which hydrogen is split into hydrogen ions and electrons while passing through a membrane electrode assembly (MEA), and the cathode environment is an environment in which oxygen combines with the hydrogen ions to produce water after passing through the MEA.

Since the cathode environment has a high potential and is very corrosive, corrosion resistance is desirably tested in the cathode environment.

Further, it is desirable that the metal bipolar plate have a corrosion current density of 10 µA/cm² or less for application to PEMFC.

In order to evaluate pure corrosion resistance, the coating layer was not formed on the metal bipolar plate and heat treatment was performed at 50°C to 400°C for 30 minutes. At this time, when a target value of corrosion current density was set to 10 mA/cm² or less, the corrosion density of the metal bipolar plate exceeded the target value at 50°C and reached the target value at a temperature of 80°C or more.

In the present invention, optimal conditions for non-thermal plasma treatment were determined through experimentation, and suitability of these conditions will be described below.

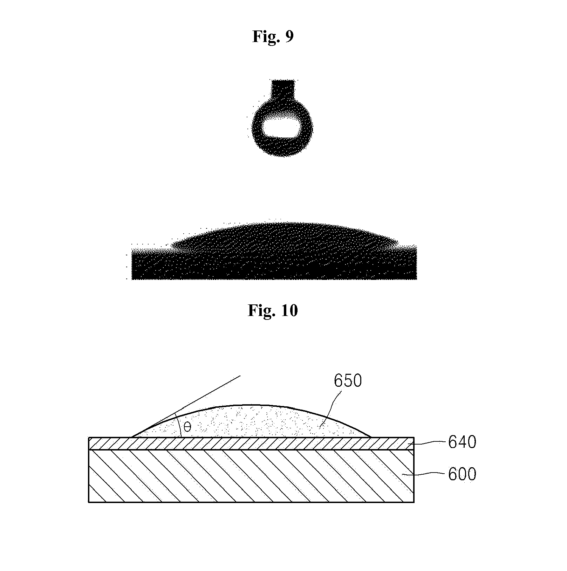

Fig. 9 is a picture of a non-thermal plasma hydrophilic treatment layer according to one embodiment of the present invention, showing hydrophilic properties of the non-thermal plasma hydrophilic treatment layer in side view.

In Fig. 9, which shows a water droplet dispersed on a metal bipolar plate according to one embodiment of the present invention, it can be seen that the metal bipolar plate has a relatively low surface contact angle.

At this time, since an accurate surface contact angle cannot be obtained on the picture, the surface contact angle will be described in more detail with reference to the following figure.

Fig. 10 is a side-sectional view of the non-thermal plasma hydrophilic treatment layer according to one embodiment of the present invention, showing the hydrophilic properties of the non-thermal plasma hydrophilic treatment layer

Fig. 10 shows a water droplet 650 dispersed on a hydrophilic treatment layer 640 formed on a metal bipolar plate 600, in which the surface contact angle (θ) is 30° or less.

Metal bipolar plates for fuel cells according to some examples were evaluated according to the aforementioned evaluation methods, and results thereof are shown in Table 1.

### Example 1

A 0.1t thick metal bipolar plate was prepared using stainless steel SUS 316L containing 18 wt% of chromium, followed by pretreatment cleaning with acetone for 5 minutes and non-thermal plasma treatment using O₂ and Ar for 5 minutes.

### Example 2

All of the same processes as in Example 1 were performed except that, after pretreatment, an Au coating layer having a coating density of 250 µg/cm² was formed via CVD, followed by the non-thermal plasma treatment.

### Example 3

All of the same processes as in Example 1 were performed except that, after pretreatment, a Pt coating layer having a coating density of 250 µg/cm² was formed via PVD, followed by non-thermal plasma treatment.

### Comparative Example 1

A 0.1t thick metal bipolar plate was prepared using stainless steel SUS 316L containing 18 wt% of chromium.

### Comparative Example 2

The metal bipolar plate was prepared in the same manner as in Comparative Example 1 except that pretreatment cleaning was performed using acetone for 5 minutes.

### Comparative Example 3

The metal bipolar plate was prepared in the same manner as in Comparative Example 2 except that, after pretreatment, an Au coating layer having a coating density of 250 µg/cm² was formed via CVD.

### Comparative Example 4

The metal bipolar plate was prepared in the same manner as in Comparative Example 2 except that, after pretreatment, a Pt coating layer having a coating density of 250 µg/cm² was formed via PVD.

Next, in order to impart characteristics obtained by thermal treatment of a gasket to the metal bipolar plates of Examples 1 to 3 and Comparative Examples 1 to 4, the bipolar plates were subjected to heat treatment at 250°C for 12 hours, followed by measurement of corrosion resistance, electrical conductivity and contact angle.

**Table 1**

| | Surface treatment | | | | Corrosion resistance (mA/cm2) | Electrical Conductivity (mΩcm²) | Contact angle (°) |
|---|---|---|---|---|---|---|---|
| | Pretreatment (dry or wet) | Wet coating | Dry coating | Non-thermal plasma treatment | | | |
| Comparative Example1 | X | X | X | X | 7.68 | 126.8 | 76 |
| Comparative Example2 | O | | X | X | 2.85 | 37.5 | 68 |
| Comparative Example3 | O | O | X | X | 0.65 | 27 | 64 |
| Comparative Example4 | O | X | O | X | 0.02 | 21 | 78 |
| Example1 | O | X | X | O | 2.56 | 25.0 | 28 |
| Example2 | O | O | X | O | 0.45 | 24.5 | 24 |
| Example3 | O | X | O | O | 0.01 | 18.7 | 15 |

Referring to Table 1, in the metal bipolar plates of Comparative Examples 1 to 4 in which the non-thermal plasma treatment was not performed, the contact angle exceeded 30°. Thus, it can be seen that the metal bipolar plates of the comparative examples had hydrophobic properties. Therefore, it can be seen that the metal bipolar plates of the comparative examples had very low flowability of water therein.

As such, in the bipolar plate for fuel cells according to the present invention, the non-thermal plasma hydrophilic treatment layer may provide excellent corrosion resistance and electrical conductivity, and may ensure a small surface contact angle, thereby providing hydrophilic properties which improve flowability of water or gas in the fuel cell.

## Claims

1. A method for manufacturing a bipolar plate for fuel cells, comprising:
performing surface modification on a surface of the bipolar plate to have a hydrophilic surface so as to ensure good flowability of water and gas.

2. The method according to claim1, wherein the bipolar plate is made of a stainless steel plate or a stainless steel plate including a coating layer.

3. The method according to claim1, wherein the surface modification comprises non-thermal plasma treatment.

4. The method according to claim 3, wherein the non-thermal plasma treatment comprises injecting plasma to the surface of the metal bipolar plate, the plasma comprising at least one selected from among oxygen (O₂), nitrogen (N₂), hydrogen (H₂) and argon (Ar).

5. The method according to claim 3, wherein the non-thermal plasma treatment is performed for 1 second to 600 seconds.

6. The method according to claim 3, wherein the non-thermal plasma treatment is performed until the metal bipolar plate has a surface roughness Ra of 0.001 µm to 1 µm

7. A method for manufacturing a bipolar plate for fuel cells, comprising:
(a) forming a metal bipolar plate for fuel cells;
(b) performing pretreatment on a surface of the metal bipolar plate; and
(c) forming a plasma hydrophilic treatment layer by performing non-thermal plasma treatment on the surface of the metal bipolar plate after performing the pretreatment.

8. The method according to claim 7, wherein the step of (b) performing pretreatment comprises at least one of (b-1) wet-cleaning the surface of the metal bipolar plate, and (b-2) dry-cleaning the surface of the metal bipolar plate.

9. The method according to claim 8, wherein the step of (b-1) wet cleaning may be performed using acetone or ethanol for 5 minutes to 10 minutes.

10. The method according to claim 8, wherein the step of (b-2) dry cleaning is performed using atmospheric pressure plasma cleaning.

11. The method according to claim 7, further comprising:
forming a coating layer on the surface of the metal bipolar plate between the step of (b) performing pretreatment and the step of (c) performing non-thermal plasma treatment.

12. The method according to claim 11, wherein the coating layer is a dry or wet coating layer.

13. A bipolar plate for fuel cells manufactured by the method according to any one of claims 1 to 12, and comprising a plasma hydrophilic treatment layer to improve corrosion resistance, electrical conductivity and water flowability.

14. The bipolar plate for fuel cells according to claim 13, wherein the plasma hydrophilic treatment layer has a corrosion current density of 10 mA/cm² or less (@0.9VNHE) (durability) and a contact resistance of 25 mΩcm² or less (electrical conductivity).

15. The bipolar plate for fuel cells according to claim 13, wherein the plasma hydrophilic treatment layer has a surface contact angle of 30° or less (water flowability).

16. The bipolar plate for fuel cells according to claim 13, wherein the plasma hydrophilic treatment layer has a thickness of 1 nm to 10,000 nm.
